# EUROPÄISCHE PATENTSCHRIFT

(11) **EP 0 688 742 B1**
(45) Veröffentlichungstag und Bekanntmachung des Hinweises auf die Patenterteilung: **15.09.1999**
(21) Anmeldenummer: 95109235.2
(22) Anmeldetag: 14.06.1995
(51) Int. Cl.: C04B 7/24, A62D 3/00

(54) **Verfahren zur Behandlung und umweltverträglichen Verwertung von Asbestzementprodukten**
Method for treatment of asbestos-cement products and environmentally friendly use thereof
Méthode de traitement d'un ciment d'amiante et son utilisation non polluante

(30) Priorität: 25.06.1994 DE 4423728
(43) Veröffentlichungstag der Anmeldung: 27.12.1995
(73) Patentinhaber: Institut für Baustoff- und Umweltschutz-Technologie IBU-tec, 99425 Weimar (DE); TÜV Thüringen GmbH, 99096 Erfurt (DE); Kraemer, Klaus, 83547 Altbabensham bei Wasserburg/Inn (DE)
(72) Erfinder: Gleichmar, Gert, Dr.-Ing., D-99869 Günthersleben (DE); Kieser, Joachim, Dr.rer.nat., D-99094 Erfurt (DE); Ambrosius, Stefan, D-99439 Berlstedt (DE); Görmar, Helmut, D-99425 Weimar (DE); Krähner, Arno, Dr.-Ing., D-99423 Weimar (DE); Buhrandt, Wolf-Joachim, D-07747 Jena (DE)
(74) Vertreter: Eitle, Werner, Dipl.-Ing.

(56) Entgegenhaltungen:
- EP-A- 0 545 850
- DE-A- 3 728 787
- DE-A- 4 239 565
- DE-A- 4 330 551
- CHEMICAL ABSTRACTS, vol. 113, no. 6, 6.August 1990 Columbus, Ohio, US; abstract no. 45318c, L. AMRICH ET AL. 'The use of asbestos wastes in silicate industry' & EPITOANYAG, Bd. 41, Nr. 6, 1989 HUNGARY, Seiten 213-218,
- CHEMICAL ABSTRACTS, vol. 114, no. 16, 22.April 1991 Columbus, Ohio, US; abstract no. 148986u, V. E. KAUSHANSKII ET AL. 'Use of wastes from asbestos-cement manufacture for manufacturing portland cement clinker' & REF. ZH., KHIM.; ABSTR. NO. 20M428, RUSSIA,
- Asbest Handbuch, 5170, Seiten 1, 2
- TRGS 519 (1995), Seite 20
- Gefahrstoffe im Hochbau (1996), Seiten 21-24
- ZKG International 3 (1996), Seiten 444-453

## Beschreibung

Die Erfindung betrifft ein Verfahren zur Behandlung und umweltverträglichen Verwertung von Asbestzementprodukten unter Einbeziehung eines thermischen Verfahrens zur Umwandlung der Asbestkomponente.

Asbest stellt einen Gefahrstoff dar, der in einer Vielzahl unterschiedlicher Produkte enthalten ist. Der Umgang mit diesen Stoffen ist fast vollständig verboten mit Ausnahme von Abbruch-, Sanierungs- und Instandhaltungsarbeiten. Die dabei anfallenden Abfälle werden nach dem derzeitigen Stand der Technik in unbefriedigender Weise auf Deponien abgelagert. In den nächsten Jahrzehnten werden auf Grund der genannten Arbeiten und der auslaufenden Einsatzzeit (Ende der Lebensdauer) allein in Deutschland ca. 30 Millionen Tonnen Asbestzementabfälle anfallen, die nach dem derzeitigen Stand der Technik zu deponieren wären. Weiterhin stellt zur Zeit die Entsorgung von Asbestzementrohren ein ungelöstes Problem insofern dar, daß diese vor der Ablagerung auf Deponien zerstört oder ihre Hohlräume aufgefüllt werden müssen.

Neben der Deponierung von Asbestzementabfällen ist deren Entsorgung auf der Basis einer chemischen oder thermischen Behandlung bekannt. So wird in der DE-OS 3 728 787 ein Verfahren zur Beseitigung von Asbestrückständen beschrieben, das dadurch gekennzeichnet ist, daß diese in einem Drehofen auf ca. 800 °C unter Zugabe eines Reaktionsmittels, z. B. Phosphorsäure, zu Zement oder Forsterit umgewandelt werden sollen.

In der DE-OS 4 023 881 wird ein Verfahren zur Herstellung schwermetallhaltiger auslaugbeständiger Gläser unter Zusatz von Glasbildnern beschrieben. In einer Ausgestaltungsvariante der Erfindung werden dem thermisch zu behandelnden Müll einer Müllverbrennungsanlage glasbildende Stoffe zugesetzt, die die Einstellung des Calcium-, Silicium-, und/oder Aluminiumgehaltes in einem definierten Bereich ermöglichen. Der Gehalt an Silicium kann in Form von Sand, gefällter Kieselsäure und u. a. auch Asbest eingestellt werden. Der Asbest wird bei Temperaturen von bis zu 1450°C in die Innenstruktur des Glases absorbiert und damit Teil der Molekülstruktur. Die Faserstruktur der Asbestabfälle ist damit aufgehoben. Die so gewonnenen Gläser können beispielsweise als Kiesersatz in Baustoffen verwendet werden.

Weitere thermische Verfahren beziehen sich auf das Einbringen von asbesthaltigem Abfall in die Schmelzzone eines metallurgischen Schachtofens (DE-OS 4 301 977). Zerkleinerter Asbestabfall wird mit Steinkohlestaub, Natriumcarbonat, Calciumfluorid und einem wasserlöslichen organischen Bindemittel vermischt und nachfolgend zerkleinert. Das zerkleinerte Gemisch wird in einem Lichtbogen bei 1400°C reduzierend geschmolzen. Aus dem Schmelzofen erfolgt ein getrennter Abzug des teils mineralischen und des teils metallischen Schmelzgutes. Die mineralische Schlacke kann zu einem für die Baustoffherstellung verwertbaren Rohstoff weiterverarbeitet werden, das metallische Schmelzgut als Ausgangsstoff oder als Zuschlag für Metallverhüllungsverfahren dienen (DE-OS 4 004 201).

In der DE-OS 4 035 358 wird ein Verfahren zur thermischen Behandlung von Asbestabfällen in einem Drehrohrofen beschrieben. In dem Drehrohrofen werden die Abfälle umgewälzt und bei Temperaturen von etwa 1100°C über einen Zeitraum von 30 bis 70 Minuten behandelt. Dabei erfolgt eine Modifizierung des Asbestfasermaterials in vorwiegend Forsterit.

Weiterhin ist ein Einschluß der asbesthaltigen Abfallstoffe in staubdicht verschlossene Behälter mit nachfolgender Aufgabe in einen Schmelzofen bekannt (DE-OS 4 227 024).

Gemäß der DE-OS 3 931 686 erfolgt das Schmelzen der Asbestfasermaterialien in Anwesenheit eines Flußmittels bei Temperaturen, unterhalb 1000°C und Überführung in ungefährliche Metalloxide.

Aus der DE-OS 3 914 553 ist die Versinterung der Faserstrukturen von Chrysotil und Krokydolith unter gleichzeitiger mechanischer Beeinflussung, wobei diese nicht näher erläutert ist, bekannt.

Die Einbindung von industriellen Asbestabfällen in Pellets gemeinsam mit Glas, Alkalimetallsalzen oder anderen Alkalichloriden und Eisen oder Eisensalz und Erhitzung auf 800°C bis 1200°C ist aus der EP 0 568 367 und das Schmelzen von Asbest in einem Induktionsofen bei mindestens 1250°C, vorzugsweise 1400°C bis 1500°C, mit nachfolgender Wiederverwendung des sich gebildeten Silikatproduktes in keramischen oder Glasindustrie aus der EP 0 265 051 bekannt.

In Epitoanyag 41(6) 1989, 213 - 218 ist ein Verfahren zur Verwertung von Asbestabfällen in der Silicatindustrie beschrieben. Aus Kfz-Bremsfuttern anfallende Asbestabfälle werden als Nebenkomponenten mit einem Anteil von etwa 10% bzw. 3% zu dem Rohmaterial zur Ziegel- bzw. Zementherstellung vermischt und in Ziegelöfen/Zementöfen in herkömmlicher Weise zu Ziegeln bzw. Zement gebrannt, wodurch die in den Bremsfutterabfällen vorhandenen Asbestmineralien zu Forsterit umgewandelt werden.

Der Nachteil der chemischen Verfahren zur Behandlung von Asbestzementabfällen besteht darin, daß ein umfangreicher Einsatz des Verfahrens ein entsprechend hohes Aufkommen an Gefahrstofftransporten durch den Transport von Flußsäure bedingen würde, die bei Unfällen schwere Schäden an der Umwelt oder Personen verursachen können. Außerdem ist Flußsäure eine sehr teure Chemikalie, so daß diese Verfahren an sich sehr kostenaufwendig sind.

Nachteil der genannten thermischen Verfahren ist der Umstand, daß bei Behandlung von Asbestzementprodukten mit maximal 15 % Asbestanteil 85 ... 90 % der hydratisierten Zementmatrix bis zur Zersetzung der Asbestminerale bzw. bis zur Schmelzebildung bei Verglasung aufgeheizt werden muß, ohne daß für die Zementkomponente dafür eine ursächliche Notwendigkeit besteht. Der erforderliche Energieaufwand ist, bezogen auf den niedrigen Asbestanteil, unangemessen hoch.

Die Aufgabe der Erfindung besteht darin, ein Verfahren zur Behandlung und umweltverträglichen Verwertung von Asbestzementprodukten zu entwickeln, das gegenüber dem Stand der Technik kostengünstig ist und ein Risiko gegenüber schädlichen Umwelteinflüssen nahezu vollständig ausschließt.

Erfindungsgemäß wird das entsprechend des kennzeichnenden Merkmales des Patentanspruches dadurch gelöst, daß die Asbestzementprodukte in einem Schwarzbereich mit Unterdruckhaltung grobzerkleinert und in einer Mühle aufgemahlen werden. Das so erhaltene Asbestzementmehl wird im Bereich der Drehofenflamme einer Zementklinker-Produktionslinie eingeblasen. Der Anteil des eingeblasenen Asbestzementmehls beträgt in Abhängigkeit von der eingesetzten Brennstoffart 2 bis 5 %, bezogen auf die Zementrohmehlmischung, wobei jeweils 2 bis 5 % der Zementrohmehlmischung substituiert werden.

Bei Einsatz aschehaltiger fester Brennstoffe wird die zudosierbare Asbestzementmehlmenge mit maximal 3 % limitiert. Bei Öl- bzw. Gasfeuerung wird die Obergrenze des Asbestzementmehlanteils mit 5 % festgelegt.

Infolge der hohen Flammentemperaturen von 1800°C werden die Asbestanteile umgewandelt und der thermisch modifizierte Reststoff durch Assimilation im Brenngut des Ofens aufgenommen und damit Bestandteil des Zementklinkers.

Vorteilhaft ist dabei die nahezu identische chemische Zusammensetzung von Brenngut und, der im Flammenbereich thermisch behandelten Zementmatrix des Asbestzementmehls.

Mit Passieren des Flammenbereichs erfolgt im Asbestanteil durch Freisetzung des Kristallwassers eine Zerstörung der Gitterstruktur und gleichzeitig Neubildung wasserfreier Magnesiumsilikate. Die Fasermorphologie der Asbestkomponente erfährt dabei eine vollständige Umwandlung.

Die bei der Herstellung normgerechter Portlandzemente notwendige Begrenzung des MgO-Gehaltes zur Vermeidung von Magnesiatreiben im Beton erfordert eine gezielte Einbeziehung der Asbestzementkomponente in die Berechnung der vorgegebenen Zusammensetzung des Rohmehls als Aufgabematerial bzw. des Klinkers als Endprodukt bei der Zementklinkerherstellung.

Erfindungsgemäß können eventuell enthaltene organische Bestandteile im Asbestzement bei Durchgang durch die Flamme quantitativ verbrannt und damit schadlos beseitigt werden.

Die Vorteile des erfindungsgemäßen Verfahrens bestehen darin, daß Asbestzementprodukte kostengünstig und umweltverträglich verwertet werden können und das so entstandene Produkt einen hochwertigen Baustoff darstellt, der keinerlei schädliche Umwelteinflüsse auslöst.

Die Erfindung wird anhand eines Ausführungsbeispiels näher erläutert.

Die Asbestzementprodukte werden im Schwarzbereich mit Unterdruckhaltung geshreddert und anschließend in einer Mühle aufgemahlen. Das so hergestellte Asbestzementmehl wird im Bereich der Drehofenflamme eines Portlandzementklinkerherstellungsprozesses zugeführt.

Zur Herstellung von Portlandzementklinker in einem Zementwerk ist zur Sicherung der geforderten Klinkerqualität das zu sintemde Rohmehl mit den Parametern
Kalkslandard 1 = 98
Silikatmodul = 2.8
Tonerdemodul = 1.9
konstant zu halten.

Die dazu erforderliche Mischung von Rohstoffen besteht aus
Kalkstein 87 %
Ton 5 %
Sand 8 %.

Eine Zugabe von Asbestzementmehl als weitere Rohmehlkomponente in Höhe von 2 %, bezogen auf die ursprüngliche Rohmehlmischung, hat bei Einhaltung der geforderten Rohmehlparameter zur Folge, daß 1 % Kalkstein und 1 % Sand substituiert werden.

Bezogen auf einen Anlagendurchsatz von 2000 t Klinker/d können 70 t Asbestzementmehl/d zudosiert werden.

Der bei normalem Rohmehleinsatz resultierende MgO-Gehalt von Klinker von z. B. 1.8 ... 2.0 % steigt bei Zugabe von Asbestzementmehl mit o. g. Anteil auf ca. 2.0 ... 2.1 % und liegt damit deutlich unter dem Grenzwert einschlägiger Zementnormen mit MgO ≤ 5 %.

## Patentansprüche

1. Verfahren zur Behandlung und umweltverträglichen Verwertung von Asbestzement-produkten unter Einbeziehung eines thermischen Verfahrens zur Umwandlung der Asbestkomponente, gekennzeichnet dadurch, daß die Asbestzementprodukte im Schwarzbereich mit Unterdruckhaltung grobzerkleinert und anschließend zu Asbestzementmehl aufgemahlen und im Bereich der Drehofenflamme einer Zementklinker-Produktionslinie zugeführt werden, wobei der Anteil an zugeführtern Asbestzementmehl in Abhängigkeit von der eingesetzten Brennstoffart 2 bis 5 %, bezogen auf die Zementrohmehlmenge, beträgt und dadurch jeweils 2 bis 5 % der Zementrohmehlmischung substituiert werden, und daß bei Temperaturen im Brennerbereich von ca. 1800°C das zugeführte Asbestzementmehl thermisch modifiziert und anschließend Bestandteil des Zementklinkers wird.

2. Verfahren nach Anspruch 1, gekennzeichnet dadurch, daß der Anteil an zugeführtem Asbestmaterial bei Einsatz von aschehaltigen festen Brennstoffen maximal 3 %, bezogen auf die Zementrohmehlmenge, beträgt.

## Claims

1. Method for treating and utilising in an environmentally friendly manner asbestos cement products by using a thermal method for converting the asbestos component, characterised in that the asbestos cement products are coarsely comminuted in the black region at underpressure and subsequently ground to form asbestos cement powder and in the region of the rotary kiln flame are supplied to a cement clinker production line, wherein the proportion of asbestos cement powder supplied, depending on the type of fuel used, is 2 to 5% in relation to the quantity of cement raw powder, thereby substituting in each case 2 to 5% of the cement raw powder mix and that at temperatures in the burner range of approximately 1800°C the asbestos cement powder supplied is heat modified and then becomes part of the cement clinker.

2. Method according to claim 1, characterised in that when using ash-containing solid fuel material the proportion of the asbestos material supplied is at maximum 3% in relation to the quantity of cement raw powder.

## Revendications

1. Procédé de traitement et utilisation compatible avec l'environnement de produits à base de ciment d'amiante impliquant un procédé thermique de conversion des composants contenant de l'amiante, caractérisé par le fait que les produits à base de ciment d'amiante sont broyés grossièrement dans la zone des crus noirs avec maintien d'une dépression, puis sont moulés en farine pour donner une farine de ciment d'amiante et sont amenés dans la zone de la flamme d'un four rotatif d'une ligne de production de clinker de ciment, la proportion de farine de ciment d'amiante amenée étant, en fonction du type de combustible utilisé, de 2 à 5 % de la quantité de farine brute de ciment et de ce fait chaque fois substituée à 2 à 5 % du mélange de farine brute de ciment, et en ce que, aux températures régnant dans la zone du brûleur, d'environ 1800°C, la farine de ciment d'amiante amenée est modifiée thermiquement puis devient un constituant du clinker de ciment.

2. Procédé selon la revendication 1, caractérisé par le fait que la proportion de matériau d'amiante amené, en cas d'utilisation de combustibles solides contenant des cendres, est au maximum de 3 %, par rapport à la quantité de farine brute de ciment.
